(19) Europäisches Patentamt
European Patent Office
Office européen des brevets

(11) EP 2 816 259 A1

(12) **EUROPÄISCHE PATENTANMELDUNG**

(43) Veröffentlichungstag:
24.12.2014 Patentblatt 2014/52

(51) Int Cl.:
*F16H 63/34* (2006.01)    *F16H 63/38* (2006.01)

(21) Anmeldenummer: 14171128.3

(22) Anmeldetag: 04.06.2014

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(30) Priorität: 18.06.2013 DE 102013106301

(71) Anmelder: GETRAG Getriebe- und Zahnradfabrik Hermann Hagenmeyer GmbH & Cie KG
74199 Untergruppenbach (DE)

(72) Erfinder: Burgardt, Georg
74626 Bretzfeld (DE)

(74) Vertreter: Witte, Weller & Partner Patentanwälte mbB
Postfach 10 54 62
70047 Stuttgart (DE)

(54) **Parksperrenanordnung und Kraftfahrzeuggetriebe**

(57)    Parksperrenanordnung (30) für ein Kraftfahrzeuggetriebe (16), mit einem Gehäuse (32), einem Parksperrenrad (34), das an einer Welle (26) eines Kraftfahrzeuggetriebes (16) festlegbar ist und eine Verzahnung mit Zähnen (36) und Zahnlücken (38) aufweist, einer Parksperrenklinke (40), die an dem Gehäuse (32) zumindest zwischen einer Freigabeposition (FP) und einer Sperrposition (SP) beweglich gelagert ist und einen Klinkenzahn (44) aufweist, der in der Sperrposition (SP) in eine Zahnlücke (38) des Parksperrenrades (34) greift, einem Stellglied (50), das an dem Gehäuse (32) zwischen einer Grundposition (GP) und einer Betätigungsposition (BP) beweglich gelagert ist, einem Betätigungsglied (60), das in Bezug auf das Stellglied (50) begrenzt beweglich gelagert ist und das mit der Parksperrenklinke (40) gekoppelt ist, und einer Federanordnung (65), die dazu ausgebildet und angeordnet ist, um für den Fall, dass bei einer Bewegung des Stellgliedes (50) in die Betätigungsposition (BP) der Klinkenzahn (44) auf einem Zahn (36) des Parksperrenrades (34) aufliegt und aus diesem Grund eine Relativbewegung zwischen dem Stellglied (50) und dem Betätigungsglied (60) erfolgt ist, Energie zum Bewegen der Parksperrenklinke (40) in die Sperrposition (SP) zu speichern.

Dabei wirkt die Federanordnung (65) zwischen dem Gehäuse (32) und dem Betätigungsglied (60).

Fig.1

**Beschreibung**

Die vorliegende Erfindung betrifft eine Parksperrenanordnung für ein Kraftfahrzeuggetriebe, mit einem Gehäuse, mit einem Parksperrenrad, das an einer Welle eines Kraftfahrzeuggetriebes festlegbar ist und eine Verzahnung mit Zähnen und Zahnlücken aufweist, mit einer Parksperrenklinke, die an dem Gehäuse zumindest zwischen einer Freigabeposition und einer Sperrposition beweglich gelagert ist und die einen Klinkenzahn aufweist, der in der Sperrposition in eine Zahnlücke des Parksperrenrades greift, mit einem Stellglied, das an dem Gehäuse zwischen einer Grundposition und einer Betätigungsposition beweglich gelagert ist, mit einem Betätigungsglied, das in Bezug auf das Stellglied begrenzt beweglich gelagert ist und das mit der Parksperrenklinke gekoppelt ist, und mit einer Federanordnung, die dazu ausgebildet und angeordnet ist, um für den Fall, dass bei einer Bewegung des Stellgliedes in die Betätigungsposition der Klinkenzahn auf einem Zahn des Parksperrenrades aufliegt und aus diesem Grund eine Relativbewegung zwischen dem Stellglied und dem Betätigungsglied erfolgt ist, Energie zum Bewegen der Parksperrenklinke in die Sperrposition zu speichern.

Ferner betrifft die vorliegende Erfindung ein Kraftfahrzeuggetriebe mit einer Welle und mit einer derartigen Parksperrenanordnung.

Eine Parksperrenanordnung der gattungsgemäßen Art ist aus dem Dokument DE 20 2008 001 760 U1 bekannt. Hier weist das Stellglied eine Welle auf, an der ein Nocken begrenzt verdrehbar gelagert ist. Der Nocken ist über eine koaxial zu der Welle angeordnete Drehfeder mit der Welle verbunden, wobei die Drehfeder die Funktion eines Energiespeichers hat, wenn die Welle verdreht wird, um die Sperrposition einzurichten, sich zu diesem Zeitpunkt der Klinkenzahn jedoch radial außerhalb eines Zahnes des Parksperrenrades befindet.

An der Welle ist eine Exzenterscheibe festgelegt, die eine Ausnehmung aufweist, in die ein Stift eingreift, der fest mit der Parksperrenklinke verbunden ist. Hierdurch wird die Parksperrenklinke zumindest abschnittsweise zwangsgeführt. Insbesondere kann durch diese Zwangsführung erreicht werden, dass die Parksperrenklinke in der Freigabeposition verriegelt ist. Hierdurch ist es nicht notwendig, die Parksperrenklinke mittels einer Haltefeder in die Freigabeposition vorzuspannen.

Eine weitere Variante einer Parksperrenanordnung ist aus dem Dokument DE 10 2009 018 122 B4 bekannt. Hier ist ein Betätigungsglied nicht durch einen verdrehbaren Nocken sondern durch einen axial versetzbaren Ziehkeil gebildet, der an einem Klinkenrücken der Parksperrenklinke angreift. Hierbei ist eine Federanordnung zur Bildung eines Energiespeichers für den Fall des Versetzens einer Aktuatorstange von einer Grundposition in eine Betätigungsposition als Druckfeder ausgebildet, die sich an der Aktuatorstange abstützt. Eine ähnliche Parksperre ist aus dem Dokument DE 10 2004 021 981 A1 bekannt geworden.

Vor diesem Hintergrund ist es eine Aufgabe der Erfindung, eine verbesserte Parksperrenanordnung sowie ein hiermit ausgestattetes Kraftfahrzeuggetriebe anzugeben.

Diese Aufgabe wird bei der eingangs genannten Parksperrenanordnung dadurch gelöst, dass die Federanordnung zwischen dem Gehäuse und dem Betätigungsglied wirkt.

Ferner wird die obige Aufgabe gelöst durch ein Kraftfahrzeuggetriebe mit einer Welle und mit einer erfindungsgemäßen Parksperrenanordnung, wobei das Parksperrenrad an der Welle festgelegt ist.

Im Gegensatz zu den Parksperrenanordnungen des Standes der Technik, bei denen die Federanordnung zwischen dem Betätigungsglied und dem Stellglied wirkt, kann durch die erfindungsgemäße Maßnahme, die Federanordnung so auszubilden und anzuordnen, dass diese zwischen dem Gehäuse und dem Betätigungsglied wirkt, wenigstens einer der folgenden Vorteile erzielt werden.

Zum einen muss das Stellglied bei der erfindungsgemäßen Realisierung im Wesentlichen keine Reaktionskräfte des Betätigungsgliedes aufnehmen. Ferner kann ein gleichmäßigerer Kraftaufwand zum Einlegen der Parksperrenanordnung erreicht werden. Hierdurch kann es insbesondere erreicht werden, dass der notwendige Kraftaufwand zum Bewegen des Stellgliedes für die Fälle "Zahn auf Zahn" und/oder "Zahn in Lücke" kleiner und/oder einheitlicher ist als im Stand der Technik. Auch kann beispielsweise bei einer manuellen Betätigung der Parksperrenanordnung für die Bedienperson ein einheitlicherer Kraftverlauf am Schalthebel erreicht werden, so dass der Komfort insgesamt erhöht werden kann.

Insgesamt ist es ferner möglich, das Einlegen der Parksperre mit geringeren Betätigungskräften zu ermöglichen. Zudem kann die Parksperrenanordnung mit geringen Kosten realisiert werden, da die Parksperrenanordnung insbesondere eine geringe Komplexität besitzt sowie eine hohe Integrität.

Das Stellglied kann, wie oben erwähnt, entweder über eine Koppeleinrichtung mit einem Schalthebel im Fahrgastraum eines Fahrzeuges gekoppelt sein, so dass die Parksperrenanordnung manuell betätigt wird. Alternativ ist es möglich, das Stellglied mit einem Aktuator zu koppeln, der beispielsweise als hydraulischer Aktuator oder als elektromechanischer Aktuator oder als elektromagnetischer Aktuator ausgebildet sein kann.

Die erfindungsgemäße Parksperrenanordnung kann sowohl mit rotatorischer Betätigung als auch mit translatorischer Betätigung realisiert werden. Bei rotatorischer Betätigung kann die Parksperrenanordnung grundsätzlich aufgebaut sein, wie es in dem oben genannten Dokument DE 20 2008 001 760 U1 beschrieben ist, wobei der Nocken jedoch nicht über eine Drehfeder mit der Betätigungswelle verbunden ist, sondern über eine Feder mit einem Gehäuse der Parksperrenanordnung. Auf den Offenbarungsgehalt des Dokumentes DE 20 2008 001 760 U1 und paralleler Schutzrechte im In- und Ausland wird daher vollumfänglich Bezug genommen.

Bei einer translatorischen Betätigung der Parksperrenanordnung kann der grundsätzliche Aufbau ähnlich sein, wie es in dem Dokument DE 10 2009 018 122 B4 beschrieben ist, wobei ein an einer Kolbenstange beweglich gelagerter Ziehkeil sich nicht über eine Feder in Bezug auf die Betätigungsstange abstützt, sondern über eine Federanordnung mit dem Gehäuse gekoppelt ist.

Das Gehäuse der Parksperrenanordnung kann beispielsweise ein Teil eines Gehäuses des Kraftfahrzeuggetriebes sein.

Insgesamt kann eine vollintegrierte Lösung mit hoher Integrität und geringem Platzbedarf realisiert werden, wobei einfache, robuste Elemente verwendbar sind, so dass sich eine robuste Gesamtlösung ergibt.

Sofern die Parksperrenklinke in der Freigabeposition verriegelbar ist (beispielsweise durch eine Zwangsführung), ist es auch möglich, die Parksperrenklinke mittels einer weiteren Federanordnung in Richtung der Sperrposition vorzuspannen. Hierdurch kann die Federanordnung zwischen dem Gehäuse und dem Betätigungsglied kleiner dimensioniert werden, da sie nur eine kleinere Vorspannung benötigt.

Bei dem rotatorischen Betätigungssystem, wie es aus dem Dokument DE 20 2008 001 760 U1 bekannt geworden ist, kann sich erfindungsgemäß insbesondere in axialer Richtung der Betätigungswelle ein geringerer Platzbedarf ergeben, da eine zwischen dem Nocken und der Betätigungswelle vorgesehene Drehfeder nicht erforderlich ist. Stattdessen kann eine Federanordnung zwischen dem Gehäuse und dem Nocken angeordnet sein.

Die Aufgabe wird somit vollkommen gelöst.

Von besonderem Vorzug ist es, wenn die Federanordnung das Betätigungsglied in Richtung der Betätigungsposition des Stellgliedes vorspannt.

Insbesondere hierdurch wird erreicht, dass die Parksperre mit einer geringeren Betätigungskraft zu betätigen ist.

Gemäß einer weiteren bevorzugten Ausführungsform ist die Federanordnung eine Zugfeder oder eine Druckfeder mit zwei Enden, von denen eines mit dem Gehäuse verbunden ist, wobei das andere Ende mit dem Betätigungsglied verbunden ist.

Hierdurch kann die Federanordnung auf konstruktiv einfache Art und Weise realisiert werden.

Gemäß einer weiteren insgesamt bevorzugten Ausführungsform beinhaltet die Parksperrenanordnung eine Halteeinrichtung, die dazu ausgebildet ist, die Parksperrenklinke in der Freigabeposition zu halten.

Die Halteeinrichtung wirkt dabei insbesondere, wenn das Stellglied in der Grundposition ist.

Gemäß einer bevorzugten Ausführungsform beinhaltet die Halteeinrichtung eine Haltefeder, die die Parksperrenklinke in die Freigabeposition vorspannt.

Diese Variante kann insbesondere bei dem translatorischen Betätigungssystem bevorzugt sein und/oder dann, wenn für die Parksperrenklinke keine Verriegelungseinrichtung zum formschlüssigen Halten der Parksperrenklinke in der Freigabeposition vorhanden ist.

Besonders bevorzugt ist es, wenn die Halteeinrichtung eine solche Verriegelungseinrichtung aufweist, um die Parksperrenklinke in der Freigabeposition zu verriegeln.

Die Verriegelungseinrichtung kann dabei vorzugsweise eine Zwangsführung aufweisen, die starr mit dem Stellglied verbunden ist.

Die Zwangsführung kann beispielsweise durch eine Ausnehmung an einer Zwangsführungsscheibe gebildet sein, wobei ein mit der Parksperrenklinke verbundener Stift in die Ausnehmung eingreift.

Ferner ist es insgesamt bevorzugt, wenn das Stellglied mittels einer Rasteinrichtung zumindest in der Betätigungsposition rastend festlegbar ist.

Bei dieser Ausführungsform sind die Kräfte der Rasteinrichtung bei der Dimensionierung der Betätigungskräfte und der Vorspannkräfte der Federanordnung zu berücksichtigen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Darstellung eines Antriebsstranges für ein Kraftfahrzeug mit einem Getriebe, das eine Ausführungsform einer erfindungsgemäßen Parksperrenanordnung aufweist;

Fig. 2 die Parksperrenanordnung der Fig. 1 in einem Betätigungszustand "Zahn auf Zahn";

Fig. 3 die Parksperrenanordnung der Fig. 1 in einem Betätigungszustand "Zahn in Lücke";

Fig. 4 eine schematische Darstellung einer weiteren Ausführungsform einer erfindungsgemäßen Parksperrenanordnung in einer axialen Draufsicht;

Fig. 5 einen Teil der Parksperrenanordnung der Fig. 4 in einer radialen Ansicht;

Fig. 6 die Parksperrenanordnung der Fig. 4 in einem Betätigungszustand "Zahn auf Zahn";

Fig. 7 die Parksperrenanordnung der Fig. 4 in einem Betätigungszustand "Zahn in Lücke"; und

Fig. 8 einen Betätigungskraftverlauf einer Parksperrenanordnung der erfindungsgemäßen Art.

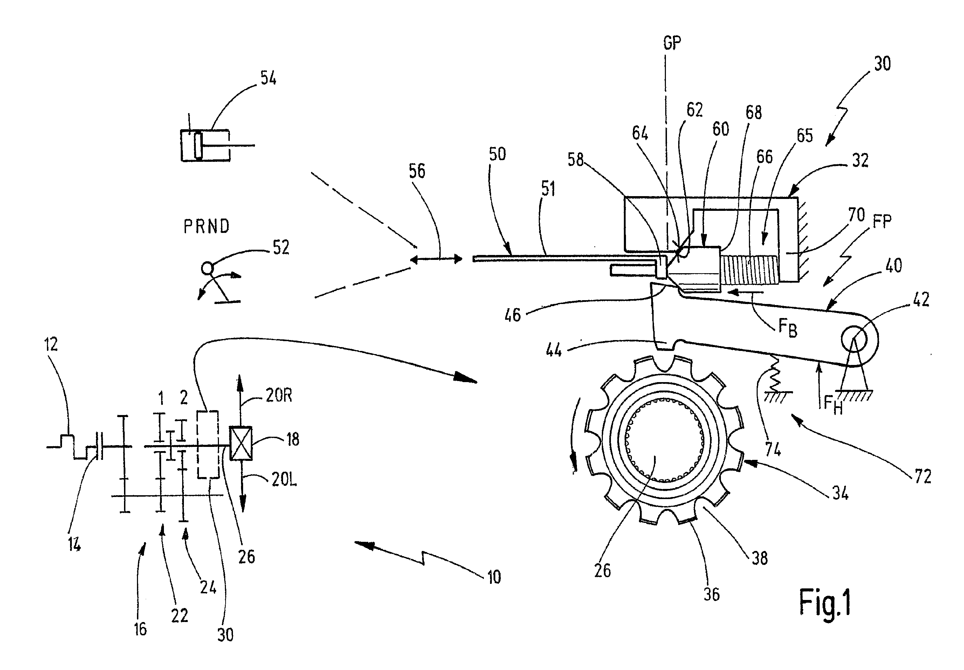

In Fig. 1 ist ein Antriebsstrang für ein Kraftfahrzeug schematisch dargestellt und generell mit 10 bezeichnet.

Der Antriebsstrang 10 weist einen Antriebsmotor 12 wie einen Verbrennungsmotor, einen Elektromotor oder dergleichen auf. Ferner beinhaltet der Antriebsstrang 10 eine Kupplungsanordnung 14 und ein Getriebe 16. Ein Ausgang des Getriebes 16 ist mit einem Differential 18 verbunden, mittels dessen Antriebsleistung auf angetriebene Räder 20L, 20R verteilt wird.

Das Getriebe 16 kann beispielsweise als Vorgelegegetriebe in Stirnradbauweise ausgeführt sein und weist Radsätze zum Einrichten von Gangstufen auf, von denen beispielhaft ein Radsatz 22 für eine Gangstufe 1 und ein Radsatz 24 für eine Gangstufe 2 dargestellt sind. Das Getriebe 16 kann jedoch auch fünf, sechs, sieben oder mehr Gangstufen aufweisen. Die Verbindung zwischen dem Getriebe 16 und dem Differential 18 erfolgt über eine Ausgangswelle 26.

An der Ausgangswelle 26 (oder an dem Differential 18) ist eine Parksperrenanordnung 30 festgelegt, die schematisch in vergrößerter Form ebenfalls in Fig. 1 dargestellt ist.

Die Parksperrenanordnung 30 beinhaltet ein Gehäuse 32, das beispielsweise Teil des Getriebegehäuses sein kann. Die Parksperrenanordnung 30 weist ein Parksperrenrad 34 herkömmlicher Bauweise auf, das Zähne 36 und Zahnlücken 38 aufweist. Das Parksperrenrad 34 ist drehfest mit der Welle 26 verbunden. Das Parksperrenrad 34 kann jedoch auch mit einer anderen Getriebewelle oder mit einem Glied des Differentials 18 verbunden sein.

Ferner weist die Parksperrenanordnung 30 eine Parksperrenklinke 40 auf, die um eine Klinkenachse 42 verschwenkbar an dem Gehäuse 32 gelagert ist, die parallel zu der Ausgangswelle 26 ausgerichtet ist. An einer zu dem Parksperrenrad 34 weisenden Seite beinhaltet die Parksperrenklinke 40 einen Klinkenzahn 44. An einer dem Parksperrenrad 34 abgewandten Seite weist die Parksperrenklinke 40 einen Klinkenrücken 46 auf.

Die Parksperrenanordnung beinhaltet ferner ein Stellglied 50, das im vorliegenden Fall durch eine Betätigungsstange 51 gebildet ist. Das Stellglied 50 kann beispielsweise manuell betätigt werden, mittels eines Wählhebels 52, der in an sich bekannter Weise in Stellungen P, R, N, D eines Automatikgetriebes verstellbar ist. Das P entspricht dabei dem Einrichten einer Parksperrenposition. Alternativ hierzu kann das Stellglied 50 mittels eines Aktuators 54 betätigt werden, der beispielsweise als hydraulischer Aktuator ausgebildet sein kann, wie in Fig. 1 schematisch angedeutet, jedoch auch als elektromotorischer oder als elektromagnetischer Aktuator realisiert sein kann. Die Stellrichtung 56 des Stellgliedes 50 ist vorliegend eine translatorische Richtung und ist parallel zu der Betätigungsstange 51 ausgerichtet.

Die Stellrichtung 56 ist windschief zu der Achse der Ausgangswelle 26 angeordnet.

In einem Bereich des Klinkenrückens 46 weist die Betätigungsstange 51 einen Anschlag 58 für ein Betätigungsglied 60 auf.

Das Betätigungsglied 60 ist parallel zu der Stellrichtung 56 an der Betätigungsstange 51 begrenzt verschieblich gelagert. Das Betätigungsglied 60 ist vorliegend als Keilelement 61 ausgebildet, mit einer Keilfläche 62, die zum einen an einem Gehäusevorsprung 64 angreift und zum anderen an dem Klinkenrücken 46.

Eine Federanordnung 65 in Form einer Druckfeder 66 ist zwischen dem Betätigungsglied 60 und dem Gehäuse 32 angeordnet, genauer zwischen einer Rückseite 68 des Betätigungsgliedes 60 und einem Gehäuseabschnitt 70.

Die Federanordnung 65 ist dabei so ausgebildet, dass sie eine Kraft $F_B$ auf das Betätigungsglied 60 ausübt, die gleichgerichtet ist mit einer Bewegung des Stellgliedes 50 zum Einlegen der Parksperre.

Dabei ist die Parksperrenklinke 40 in Fig. 1 in einer Freigabeposition FP dargestellt, in der die Parksperrenklinke 40 gegenüber dem Parksperrenrad 34 so abgehoben ist, dass das Parksperrenrad 34 frei drehbar ist, wie es durch einen Pfeil in Fig. 1 angedeutet ist.

Die Federanordnung 65 drückt das Betätigungsglied 60 dabei gegen den Anschlag 58 des Stellgliedes 50. Das Stellglied 50 wird in der dargestellten Grundposition GP mittels einer Rasteinrichtung des Wählhebels 52 oder mittels einer Federanordnung des Aktuators 54 gehalten. Alternativ hierzu kann das Stellglied 50 auch mittels einer Verriegelungseinrichtung in der Grundposition GP gehalten sein.

Die Parksperrenklinke 40 ist mittels einer Halteeinrichtung 72 in der Freigabeposition FP gehalten, die beispielsweise durch eine Haltefeder 74 gebildet sein kann, die die Parksperrenklinke 40 in die Freigabeposition FP vorspannt. Alternativ hierzu kann die Halteeinrichtung 72 auch eine Verriegelungseinrichtung beinhalten, die die Parksperrenklinke 40 hintergreift und die Parksperrenklinke 40 folglich formschlüssig in der Freigabeposition FP hält.

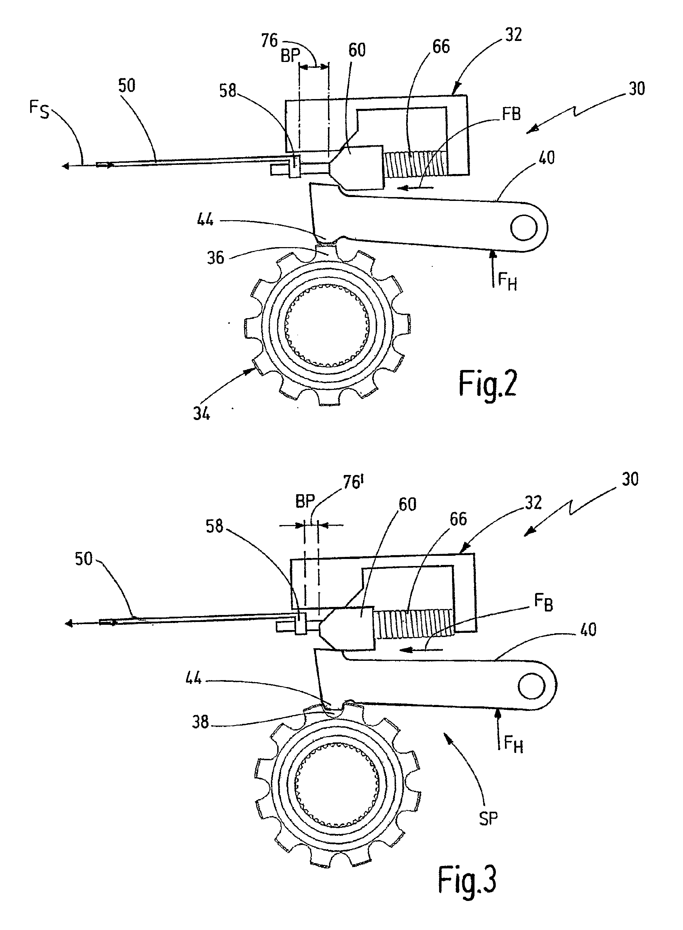

Zum Einlegen der Parksperrenanordnung 30 wird das Stellglied 50 in Stellrichtung 56 aus der in Fig. 1 gezeigten Grundposition GP in eine Betätigungsposition BP bewegt, die in den Fig. 2 und 3 dargestellt ist.

In Fig. 2 ist dabei ein Zustand gezeigt, bei dem diese Betätigung erfolgt, während der Klinkenzahn 44 auf einem Zahn 36 des Parksperrenrades 34 aufliegt und folglich nicht in eine Zahnlücke 38 eingreifen kann. Dies führt dazu, dass das Betätigungsglied 60 der Bewegung des Stellgliedes 50 nicht folgen kann sondern in der in Fig. 1 gezeigten Position verharrt. Der hierdurch eingerichtete Relativweg zwischen Stellglied 50 und Betätigungsglied 60 ist in Fig. 2 bei 76 gezeigt.

In diesem Zustand wird das Betätigungsglied 60 nach wie vor mittels der Druckfeder 66, die sich an dem Gehäuse 32 abstützt, in Richtung des Anschlages 58 des Stellgliedes 50 vorgespannt.

Sobald das Parksperrenrad 34 weiterdreht (beispielsweise bei einem Rollen des Kraftfahrzeuges), gelangt der Klinkenzahn 44 über eine Zahnlücke 38. Nun drückt die Feder 66 das Betätigungsglied 60 in Richtung des Anschlages 58 und drückt dabei mit seiner Keilfläche 62 gegen den Klinkenrücken 46, um die Parksperrenklinke 40 in eine Sperrposition SP zu drücken, bei der der Klinkenzahn 44 in eine Zahnlücke 38 eingreift. Die mittels der Druckfeder 66 ausgeübte Betätigungskraft $F_B$ ist dabei so dimensioniert, dass sie größer ist als die von der gegebenenfalls vorgesehenen Haltefeder 74 bereitgestellte Haltekraft $F_H$, wie es in Fig. 3 schematisch angedeutet ist. Es versteht sich dabei, dass die Dimensionierung der Federn 66, 74 in Abhängigkeit von dem Winkel der Keilfläche 62 sowie in Abhängigkeit von dem Radius erfolgt, mit dem die Federn an der Parksperrenklinke 40 angreifen.

Zum Auslegen der Parksperrenanordnung 30 wird das Stellglied 50 aus der in Fig. 3 gezeigten Stellung in die entgegengesetzte Richtung bewegt, wobei das Stellglied 50 zunächst gegebenenfalls einen Relativweg 76' vollzieht, bis der Anschlag 58 an dem Betätigungsglied 60 anschlägt und dieses in Auslegerichtung, also in Richtung der Grundposition, mitnimmt, wobei hierbei die Druckfeder 66 komprimiert wird.

Sobald die Keilfläche 62 den Klinkenrücken 46 hinreichend freigegeben hat, drückt die Haltefeder 74 die Parksperrenklinke 40 wieder in die Freigabeposition FP, die in Fig. 1 dargestellt ist.

Dadurch, dass die Federanordnung 65, die als Energiespeicher zum Einrichten der Sperrposition SP aus einem "Zahn auf Zahn"-Zustand gemäß Fig. 2 dient, zwischen dem Gehäuse 32 und dem Betätigungsglied 60 wirkt, und zwar in einer Richtung, die gleichgerichtet ist mit einer Bewegung des Stellgliedes 50 aus der Grundposition GP in die Betätigungsposition BP, kann das Einlegen der Parksperrenanordnung mit einer geringeren Kraft erfolgen. Zudem ist die zum Einlegen der Parksperrenanordnung erforderliche Kraft für den Fall, dass ein Zustand "Zahn auf Zahn" gemäß Fig. 2 vorliegt, und für den Fall, dass die Parksperrenklinke 40 sofort in eine Zahnlücke 38 eingreifen kann, zwar gegebenenfalls nicht gleich groß aber doch in einer ähnlichen Größenordnung.

Wenn sich, wie im Stand der Technik, eine Federanordnung als Energiespeicher an dem Stellglied 50 abstützen würde, wären die Kräfte für diese zwei unterschiedlichen Zustände "Zahn auf Zahn" und "Zahn in Lücke" deutlich unterschiedlicher.

Durch die Maßnahme, dass die Federanordnung zwischen dem Gehäuse 32 und dem Betätigungsglied 60 wirkt, kann also eine gleichförmigere Betätigungskraft unabhängig von dem Ausgangszustand der Parksperrenanordnung realisiert werden.

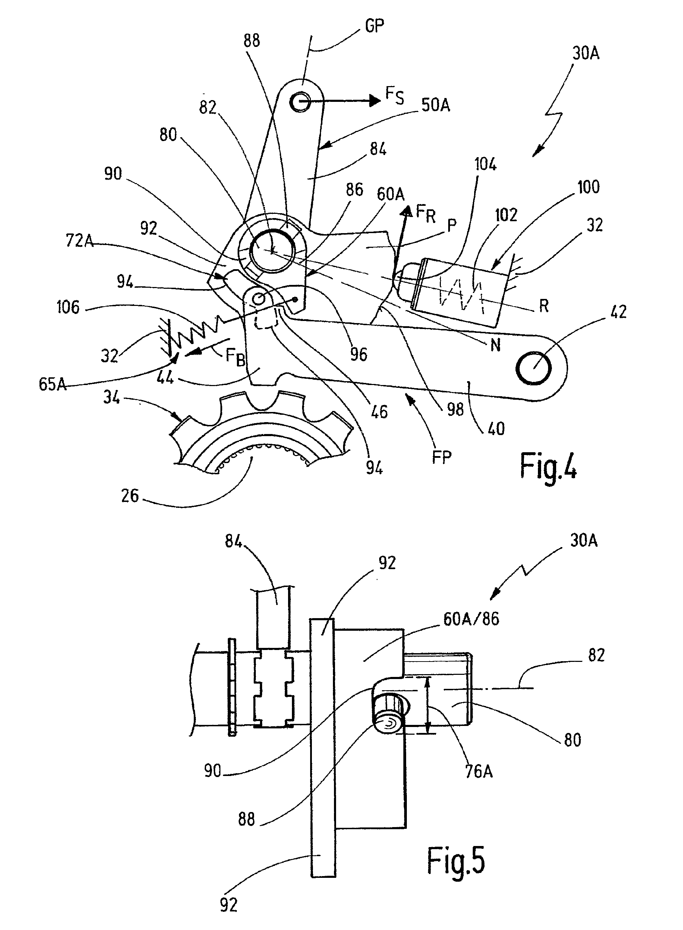

In den Fig. 4 bis 7 ist eine weitere Ausführungsform einer Parksperrenanordnung 30A gezeigt, die hinsichtlich Aufbau und Funktionsweise generell der Parksperrenanordnung 30 der Fig. 1 bis 3 entspricht. Gleiche Elemente sind daher durch gleiche Bezugszeichen gekennzeichnet. Im Folgenden werden im Wesentlichen die Unterschiede erläutert.

Während die Parksperrenanordnung 30 ein Betätigungssystem translatorischer Art aufweist, basiert die Parksperrenanordnung 30A auf einem Betätigungssystem rotatorischer Art.

Hierzu weist die Parksperrenanordnung 30A eine Welle 80 auf, deren Wellenachse 82 parallel zu der Welle 26 ausgerichtet ist. An der Welle 80 ist ein Stellglied 50A in Form eines Stellhebels 84 festgelegt. An der Welle 80 ist ferner ein Nocken 86 begrenzt verdrehbar gelagert, der ein Betätigungsglied 60A bildet. An der Welle 80 sind, wie es beispielsweise in Fig. 5 gezeigt ist, einer oder mehrere Stifte 88 festgelegt, die sich radial von der Welle 80 erstrecken. Der Stift 88 greift dabei in eine Umfangsausnehmung 90 des Nockens 86, deren Umfangslänge den maximalen Relativweg bzw. Relativwinkel 76A zwischen Welle 80 und Nocken 86 definiert.

Der Nocken 86 greift dabei an dem Klinkenrücken 46 an.

An der Welle 80 ist ferner eine Führungsplatte 92 festgelegt, an der eine exzentrisch ausgebildete Ausnehmung ausgebildet ist. In die Ausnehmung greift ein Stift 96, der fest mit der Parksperrenklinke 40 verbunden ist. Ein Innenumfang der Ausnehmung bildet folglich eine Führungskontur 94 für die Parksperrenklinke 40.

Die Führungskontur 94 ist dabei so ausgebildet, dass in der gezeigten Grundposition GP des Stellgliedes 50A der Stift 96 an einem Abschnitt der Führungskontur 94 anliegt, der ein Bewegen der Parksperrenklinke 40 aus der in Fig. 4 gezeigten Freigabeposition FP in eine Sperrposition SP verhindert. Durch die Führungskontur 94 und den Stift 96 wird folglich eine Verriegelungseinrichtung nach der Art einer Zwangsführung geschaffen.

An der Führungsplatte 92 oder an einem weiteren mit der Welle 80 verbundenen Glied ist ferner eine Rastkontur 98 ausgebildet, die mit einem Rastelement 100 zusammenwirkt. Die Rastkontur 98 ist dabei wellenförmig ausgebildet, wobei die Wellenvertiefungen den definierten Positionen eines Wählhebels entsprechen, also P, R, N, ...

Das Rastelement 100 kann beispielsweise eine Rastfeder 102 und eine Rastkugel 104 aufweisen. Das Rastelement 100 ist an dem Gehäuse 32 festgelegt. Die Rastkugel 104 greift an der Rastkontur 98 an.

Folglich wird auf die Welle 80 und das damit verbundene Stellglied 50A eine Rastkraft $F_R$ ausgeübt, deren Höhe und Richtung von der Relativposition zwischen Rastkontur 98 und Rastelement 100 abhängt.

Der Nocken 86 ist mittels einer schematisch angedeuteten Federanordnung 65A, hier in Form einer Zugfeder 106, mit dem Gehäuse 32 verbunden. Die Federanordnung 65A übt eine Betätigungskraft $F_B$ auf den Nocken 86 aus, die gleichgerichtet ist mit einer Richtung, in der der Nocken 86 zu verdrehen ist, um durch Anlage an dem Klinkenrücken 46 die Parksperrenklinke 40 aus der Freigabeposition FP in eine Sperrposition SP zu bewegen.

In Fig. 4 ist ferner eine Stellkraft $F_S$ gezeigt, die auf den Stellhebel 84 zum Einlegen der Parksperrenanordnung ausgeübt wird. Aus den Richtungen der Pfeile von $F_R$ und $F_B$ ist zu erkennen, dass die durch die Rasteinrichtung wirkende Rastkraft $F_R$, ausgehend aus der Position R, zunächst der Stellkraft $F_S$ entgegenwirkt. Die Betätigungskraft $F_B$ wirkt hingegen in die gleiche Richtung wie die Stellkraft $F_S$. Es gilt $F_S = F_B - F_R$.

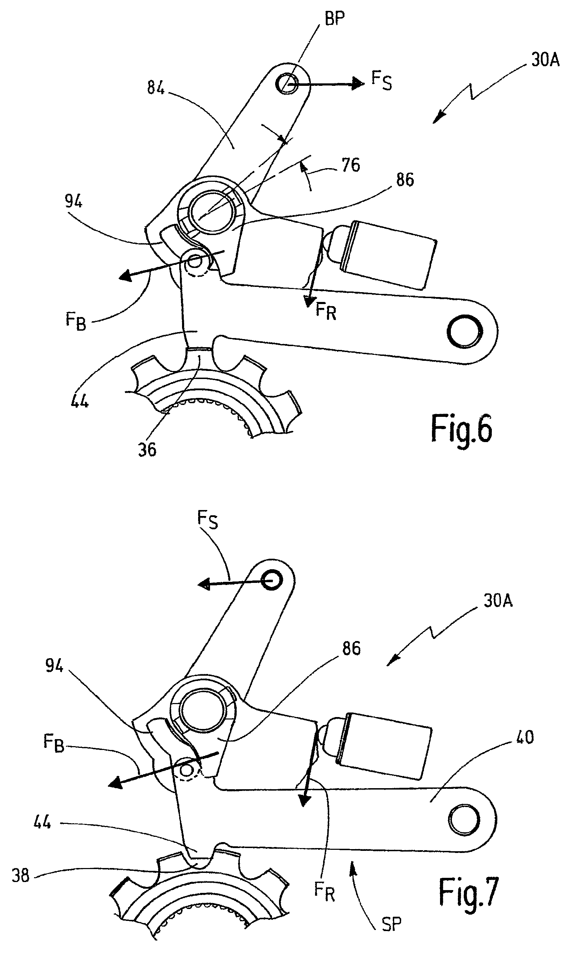

Fig. 6 zeigt die Parksperrenanordnung 30A in einem Zustand "Zahn auf Zahn", bei dem der Klinkenzahn 44 auf einem Zahn 36 des Parksperrenrades 34 aufliegt. Man erkennt, dass sich der Nocken 86 relativ zu dem Stellhebel 84 verdreht hat, wie es bei 76 angedeutet ist. Fig. 6 zeigt dabei ferner einen Zustand, bei dem die Rastkugel 104 eine Spitze der Rastkontur 98 überschritten hat, wodurch die hierdurch ausgeübte Rastkraft $F_R$ nunmehr gleichgerichtet ist wie die Stellkraft $F_S$; es gilt

$$F_S = F_R,$$

da die Wirkung der Stellkraft $F_S$ von dem Kraftfluss auf der Welle entkoppelt ist.

Sobald ausgehend von diesem Zustand das Parksperrenrad 34 verdreht wird, so dass der Klinkenzahn 44 in eine Zahnlücke 38 eingreifen kann, erfolgt dies mittels der Federanordnung 65A (die in Fig. 6 aus Übersichtlichkeitsgründen nicht dargestellt ist).

Bei dem Verdrehen der Welle 80 ist zudem in diesem Zustand der Stift 96 der Parksperrenklinke 40 innerhalb der Führungskontur 94 so angeordnet, dass eine freie Bewegung der Parksperrenklinke 40 in Richtung der Sperrposition möglich ist.

Fig. 7 zeigt die letztlich so eingerichtete Sperrposition SP, bei der der Klinkenzahn 44 in eine Zahnlücke 38 eingreift und sich der Nocken 86 wieder zurückgedreht hat. Der Nocken 86 liegt dabei auf einer Stufenkontur auf, die die Parksperrenklinke 40 in der Sperrposition SP verriegelt.

Fig. 7 zeigt ferner das Ausüben einer Stellkraft $F_S$ in die entgegengesetzte Richtung, und zwar zum Zwecke des Auslegens der Parksperrenanordnung. Hierbei wirken sowohl die Rastkraft $F_R$ als auch die Betätigungskraft $F_B$ entgegen der Stellkraft $F_S$; es gilt

$$F_S = - F_B - F_R.$$

Durch die Stellkraft $F_S$ wird der Stellhebel 84 zurückverdreht, wobei der Nocken 86 spätestens aufgrund eines Anschlages eines Stiftes 88 an der Umfangsausnehmung 90 mitgenommen wird, um die Parksperrenklinke 40 wieder freizugeben. Durch das Verdrehen wird die Parksperrenklinke 40 dabei über die Führungskontur 94 wieder aus der Sperrposition SP in die Freigabeposition FP gemäß Fig. 4 zwangsweise überführt.

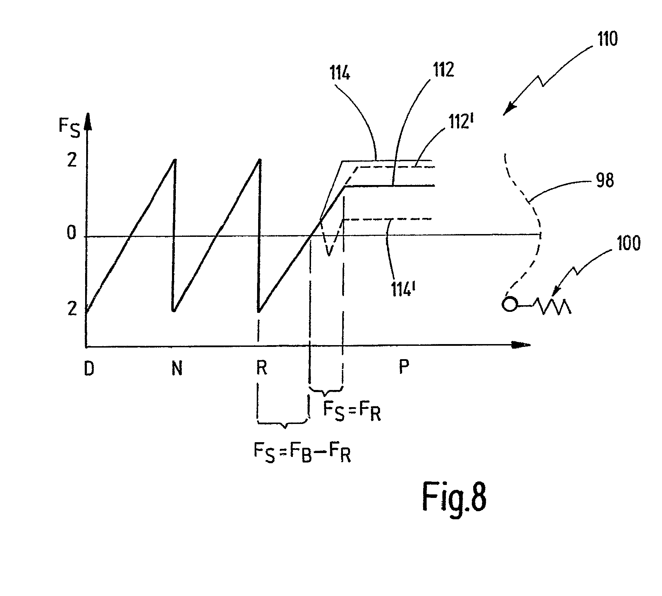

Fig. 8 zeigt eine Darstellung der Stellkraft $F_S$ über dem Weg, wobei die einzelnen Raststellungen D, N, R, P schematisch angedeutet sind.

Das Diagramm 110 der Fig. 8 zeigt dabei eine Nulllinie, unterhalb der eine Stellkraft $F_S$ aufzubringen ist. Oberhalb der Nulllinie wirkt die Kraft $F_S$ unterstützend (bzw. ist negativ), wie es schematisch durch die in Fig. 8 eingezeichnete Rastkontur 98 in Zuordnung zu einem Rastelement 100 dargestellt ist.

Wenn nun ausgehend aus der Rastposition R die Parksperrenposition P einzulegen ist, wird das Stellglied 50 von der Grundposition GP in Richtung der Betätigungsposition BP bewegt. Hierbei wirkt die Rastkraft $F_R$ zunächst der Stellkraft $F_S$ entgegen. Ab der Nulllinie wirkt die Rastkraft $F_R$ gleichgerichtet mit der Stellkraft $F_S$. Aufgrund der Umfangsbeweglichkeit von Nocken 86 zu Welle 80 wirkt die Betätigungskraft $F_B$ hierbei nicht mehr (die Stellkraft $F_S$ ist von dem Kraftfluss auf der Welle 80 entkoppelt).

In Fig. 8 ist bei 112 ein Einlegevorgang gezeigt, bei dem der Klinkenzahn 44 oberhalb einer Zahnlücke 38 liegt. Bei 114 ist die Stellkraft $F_S$ für den Fall gezeigt, dass das Stellglied 50 in einem Zustand "Zahn auf Zahn" betätigt wird.

Zum Vergleich ist bei 112' der Kraftverlauf $F_S$ im Falle einer herkömmlichen Parksperrenanordnung dargestellt, wie sie beispielsweise in der DE 20 2008 001 760 U1 beschrieben ist, und zwar für den Ausgangszustand "Zahn in Lücke". Bei 114' ist der entsprechende Kraftverlauf $F_S$ für den Ausgangszustand "Zahn auf Zahn" bei der bekannten Parksperrenanordnung dargestellt. Man erkennt hier, dass im Extremfall die Kraft wieder unter die Nulllinie fallen kann, da die Stellkraft $F_S$ bei der bekannten Parksperre zusätzlich noch das Spannen der Drehfeder aufnehmen muss.

**Patentansprüche**

1. Parksperrenanordnung (30) für ein Kraftfahrzeuggetriebe (16), mit

   - einem Gehäuse (32),
   - einem Parksperrenrad (34), das an einer Welle (26) eines Kraftfahrzeuggetriebes (16) festlegbar ist und eine Verzahnung mit Zähnen (36) und Zahnlücken (38) aufweist,
   - einer Parksperrenklinke (40), die an dem Gehäuse (32) zumindest zwischen einer Freigabeposition (FP) und einer Sperrposition (SP) beweglich gelagert ist und einen Klinkenzahn (44) aufweist, der in der Sperrposition (SP) in eine Zahnlücke (38) des Parksperrenrades (34) greift,

- einem Stellglied (50), das an dem Gehäuse (32) zwischen einer Grundposition (GP) und einer Betätigungsposition (BP) beweglich gelagert ist,

- einem Betätigungsglied (60), das in Bezug auf das Stellglied (50) begrenzt beweglich gelagert ist und das mit der Parksperrenklinke (40) gekoppelt ist, und

- einer Federanordnung (65), die dazu ausgebildet und angeordnet ist, um für den Fall, dass bei einer Bewegung des Stellgliedes (50) in die Betätigungsposition (BP) der Klinkenzahn (44) auf einem Zahn (36) des Parksperrenrades (34) aufliegt und aus diesem Grund eine Relativbewegung zwischen dem Stellglied (50) und dem Betätigungsglied (60) erfolgt ist, Energie zum Bewegen der Parksperrenklinke (40) in die Sperrposition (SP) zu speichern,

**dadurch gekennzeichnet, dass** die Federanordnung (65) zwischen dem Gehäuse (32) und dem Betätigungsglied (60) wirkt.

2. Parksperrenanordnung nach Anspruch 1, **dadurch gekennzeichnet, dass** die Federanordnung (65) das Betätigungsglied (60) in Richtung der Betätigungsposition (BP) des Stellgliedes (50) vorspannt.

3. Parksperrenanordnung nach Anspruch 1 oder 2, **dadurch gekennzeichnet, dass** die Federanordnung (65) eine Zugfeder (106) oder eine Druckfeder (66) mit zwei Enden ist, von denen eines mit dem Gehäuse (32) verbunden ist, wobei das andere Ende mit dem Betätigungsglied (60) verbunden ist.

4. Parksperrenanordnung nach einem der Ansprüche 1 - 3, **gekennzeichnet durch** eine Halteeinrichtung (72), die dazu ausgebildet ist, die Parksperrenklinke (40) in der Freigabeposition (FP) zu halten.

5. Parksperrenanordnung nach Anspruch 4, **dadurch gekennzeichnet, dass** die Halteeinrichtung (72) eine Haltefeder (74) aufweist, die die Parksperrenklinke (40) in die Freigabeposition (FP) vorspannt.

6. Parksperrenanordnung nach Anspruch 4 oder 5, **dadurch gekennzeichnet, dass** die Halteeinrichtung (72A) eine Verriegelungseinrichtung (94, 96) aufweist, um die Parksperrenklinke (40) in der Freigabeposition (FP) zu verriegeln.

7. Parksperrenanordnung nach Anspruch 6, **dadurch gekennzeichnet, dass** die Verriegelungseinrichtung (94, 96) durch eine Zwangsführung ausgebildet ist, die starr mit dem Stellglied (50) verbunden ist.

8. Parksperrenanordnung nach einem der Ansprüche 1 - 7, **dadurch gekennzeichnet, dass** das Stellglied (50) mittels einer Rasteinrichtung (98, 100) zumindest in der Betätigungsposition (BP) rastend festlegbar ist.

9. Kraftfahrzeuggetriebe (16) mit einer Welle (26) und mit einer Parksperrenanordnung nach einem der Ansprüche 1 - 8, wobei das Parksperrenrad (34) an der Welle (26) festgelegt ist.

EP 2 816 259 A1

PRND

54

56

50

51

58

GP

64 62 60 68

66 65 32 30

70 FP

46

FB

40

42

44

74

72

FH

12

1 2

20R

18

20L

26

14

16 22 24 30

26

34

38

36

10

Fig.1

Fig.2

Fig.3

Fig.4

Fig.5

BP

84

FS

30A

94

76

86

FB

FR

44

36

Fig.6

FS

94

86

30A

FB

40

FR

44

38

SP

Fig.7

Fig.8

Europäisches
Patentamt

European
Patent Office

Office européen
des brevets

## EUROPÄISCHER RECHERCHENBERICHT

**Nummer der Anmeldung**

EP 14 17 1128

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2009 208756 A (TOYOTA MOTOR CORP) 17. September 2009 (2009-09-17) * Abbildungen 1,2,4,5,6 * * Absätze [0018], [0019], [0022], [0030], [0031], [0032] * * Anspruch 1 * | 1-5,9 | INV. F16H63/34 |
| Y | | 6-8 | ADD. F16H63/38 |
| | ----- | | |
| Y,D | DE 20 2008 001760 U1 (GETRAG GETRIEBE ZAHNRAD [DE]) 17. April 2008 (2008-04-17) * Abbildungen 1-3 * * Absätze [0061], [0063], [0064] * | 6-8 | |
| | ----- | | |
| A,D | DE 10 2009 018122 B4 (GETRAG GETRIEBE ZAHNRAD [DE]; GETRAG INNOVATIONSCT [DE]) 20. Januar 2011 (2011-01-20) * Abbildung 1 * | 4-6 | |
| | ----- | | |
| A | JP 2011 084187 A (SUZUKI MOTOR CORP) 28. April 2011 (2011-04-28) * Abbildungen 1-4 * | 4-8 | |
| | ----- | | **RECHERCHIERTE SACHGEBIETE (IPC)** |
| A | JP H09 207731 A (AICHI MACHINE IND) 12. August 1997 (1997-08-12) * Abbildungen 1-7 * | 4,5,8 | F16H |
| | ----- | | |

Der vorliegende Recherchenbericht wurde für alle Patentansprüche erstellt

| Recherchenort | Abschlußdatum der Recherche | Prüfer |
|---|---|---|
| München | 7. Oktober 2014 | Werner, Michael |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 17 1128

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-10-2014

| Im Recherchenbericht angeführtes Patentdokument | Datum der Veröffentlichung | Mitglied(er) der Patentfamilie | Datum der Veröffentlichung |
|---|---|---|---|
| JP 2009208756 A | 17-09-2009 | KEINE | |
| DE 202008001760 U1 | 17-04-2008 | DE 202008001760 U1<br>US 2009193931 A1 | 17-04-2008<br>06-08-2009 |
| DE 102009018122 B4 | 20-01-2011 | KEINE | |
| JP 2011084187 A | 28-04-2011 | KEINE | |
| JP H09207731 A | 12-08-1997 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202008001760 U1
- DE 102009018122 B4
- DE 102004021981 A1